# EUROPÄISCHE PATENTSCHRIFT

(11) **EP 4 094 427 B1**
(45) Veröffentlichungstag und Bekanntmachung des Hinweises auf die Patenterteilung: **06.05.2026**
(21) Anmeldenummer: 21713613.4
(22) Anmeldetag: 17.03.2021
(51) Int. Cl.: H04M 1/02, H04N 23/51, H04N 23/57, H04N 23/55

(54) **MOBILGERÄT, KAMERAMODUL UND MOBILGERÄTSYSTEM**
MOBILE DEVICE, CAMERA MODULE AND MOBILE DEVICE SYSTEM
DISPOSITIF MOBILE , MODULE DE CAMÉRA, ET SYSTÈME À DISPOSITIF MOBILE

(30) Priorität: 31.03.2020 DE 102020108961
(43) Veröffentlichungstag der Anmeldung: 30.11.2022
(73) Patentinhaber: Leica Camera AG, 35578 Wetzlar (DE)
(72) Erfinder: SCHMIDT, Malte, 35440 Linden (DE); PANTEL, Boris, 82166 Gräfelfing (DE); WEILER, Florian, 35633 Lahnau (DE)
(74) Vertreter: Manitz Finsterwald Patent- und Rechtsanwaltspartnerschaft mbB
(86) Internationale Anmeldenummer: PCT/EP2021/056791
(87) Internationale Veröffentlichungsnummer: WO 2021/197849

(56) Entgegenhaltungen:
- EP-A1- 2 759 848
- JP-A- H09 204 950
- US-A1- 2007 166 027
- US-A1- 2013 163 170
- US-A1- 2014 094 221

## Beschreibung

Die vorliegende Erfindung betrifft ein Mobilgerät, bevorzugt Mobiltelefon, mit einer Modulhalterung für ein einen Kuppelabschnitt aufweisendes, lösbar mit der Modulhalterung verbindbares Kameramodul zum Erfassen von Still- und/oder Bewegtbildern, wobei die Modulhalterung eine Vertiefung aufweist, in welcher der Kuppelabschnitt aufgenommen ist, wenn das Kameramodul mit dem Mobilgerät verbunden ist.

Die Erfindung betrifft ferner ein Kameramodul zum Erfassen von Still- und/oder Bewegtbildern für ein eine Modulhalterung aufweisendes Mobilgerät, bevorzugt Mobiltelefon, wobei das Kameramodul einen Kuppelabschnitt aufweist, welcher dazu eingerichtet ist, mit der Modulhalterung des Mobilgeräts zusammenzuwirken, um das Kameramodul lösbar mit dem Mobilgerät zu verbinden, wobei der Kuppelabschnitt in einer Vertiefung der Modulhalterung aufnehmbar ist.

Allgemein handelt es sich bei dem genannten Mobilgerät um ein elektronisches Endgerät für mobile, drahtlose Daten-, Sprach- und/oder Bildkommunikation. Das Mobilgerät kann beispielsweise als Mobiltelefon, bevorzugt als Smartphone, oder auch als tragbarer Kleincomputer, bevorzugt als Tabletcomputer, ausgestaltet sein.

Gattungsgemäße Mobilgeräte sind in der Regel mit einer oder auch mehreren integrierten Kameras ausgestattet, mit deren Hilfe Still- und/oder Bewegtbilder erfasst werden können. Das Mobilgerät weist im Regelfall Mittel auf, um die in Form von Rohbildern erfassten Bilder zu verarbeiten, beispielsweise Bildkorrekturen durchzuführen oder die Bilddaten zu komprimieren. Die verarbeiteten Bilder können auf einem internen, d.h. einem in das Mobilgerät integrierten Speichermedium, und/oder auf einem externen Speichermedium, beispielsweise einer in das Mobilgerät einsetzbaren Speicherkarte, gespeichert werden. Weiterhin sind in der Regel Einrichtungen vorhanden, um Bilddaten und andere Daten drahtlos oder auch drahtgebunden an andere Endgeräte und/oder Server zu übermitteln.

Oftmals ist die Leistungsfähigkeit von integrierten Kameras aufgrund des innerhalb des Mobilgeräts nur begrenzt zur Verfügung stehenden Bauraums beschränkt, was sowohl den Bildsensor einer integrierten Kamera als auch deren Optik betrifft. So können beispielsweise die Auflösung und/oder die Empfindlichkeit des Bildsensors im Vergleich zu Geräten mit ausreichend zur Verfügung stehendem Bauraum reduziert sein. Bei der Optik einer integrierten Kamera können sich die baumraumbedingten Einschränkungen beispielsweise nachteilig auf die Lichtstärke und/oder die optische Auflösung auswirken.

Dedizierte Stillbild- oder Videokameras, z.B. digitale Spiegelreflexkameras, sind zwar in der Lage, qualitativ hochwertige Bilder zu erzeugen. Oftmals weisen derartige dezidierte Kameras jedoch ein hohes Gewicht und auch eine erhebliche Baugröße auf, was sich nachteilig auf die Handhabung und den Transport auswirkt. Zudem sind Mittel zur drahtlosen Übertragung der aufgenommenen Bilder bei solchen Kameras oftmals nicht oder nur in eingeschränkter Form vorhanden.

Um dennoch mit einem gattungsgemäßen Mobilgerät Bilder mit vergleichsweise hoher Qualität zu erzeugen und diese gegebenenfalls mittels des Mobilgeräts an andere Geräte drahtlos zu übermitteln, sind aus dem Stand der Technik verschiedene Lösungen bekannt.

So offenbart US 2010/0208434 A1 ein mobiles Endgerät, an dessen Gehäuseaußenseite ein Untermodul wie ein Projektormodul oder ein Kameramodul lösbar befestigt werden kann.

In US 8 704 944 B1 ist ein Rahmen zur Halterung eines Kameramoduls beschrieben. In diesem als "Craddle" bezeichneten Rahmen kann ein Smartphone eingeclipst werden, wobei die Übermittlung von Befehlen und Bilddaten zwischen dem Rahmen und dem Smartphone drahtlos erfolgt.

Aus US 2014/0094221 A1 ist ein Smartphone bekannt, welches einen Bajonettverschluss zur Ankopplung eines externen Moduls, beispielsweise eines Kameramoduls aufweist.

Für eine zuverlässige Ankopplung eines externen Kameramoduls an einem Mobilgerät ist eine mechanisch stabile und einfach zu handhabende Schnittstelle zwischen dem Mobilgerät und dem Kameramodul wünschenswert.

EP 2 759 848 A1 offenbart eine Videokamera, die über einen elektrischen DB-25-Konnektor, d.h. einem trapezförmigen Steckverbinder vom D-Sub-Typ, mit einem modularen LADAR-Sensor zur Gewinnung von 3D-Daten verbunden ist.

JP H09-204950 A betrifft verschiedene Ausführungsbeispiele von elektrischmechanischen Verbindungen. Eine Basis der Steckverbindung kann an einer Wand oder an einer Decke vorgesehen und mit einer elektrischen Leitung verbunden werden. In die Basis können verschiedene Geräte, z.B. eine Überwachungskamera, eingesteckt und verriegelt werden.

Es ist die Aufgabe der Erfindung, ein Mobilgerät und ein Kameramodul anzugeben, welche eine verbesserte Schnittstelle zum Verbinden von Mobilgerät und Kameramodul aufweisen.

Die Lösung der Aufgabe erfolgt durch ein Mobilgerät mit den Merkmalen des Anspruchs 1 und durch ein Kameramodul mit den Merkmalen des Anspruchs 8.

Bei dem erfindungsgemäßen Mobilgerät ist vorgesehen, dass die Vertiefung der Modulhalterung eine Umfangskontur aufweist, die durch einen Kreisbogenabschnitt und einen Sekantenabschnitt gebildet ist. Der Kreisbogenabschnitt und der Sekantenabschnitt grenzen derart aneinander an, dass der Sekantenabschnitt die beiden Endpunkte des Kreisbogenabschnitts verbindet. Zwischen dem Kreisbogenabschnitt und dem Sekantenabschnitt befinden sich keine oder nur sehr kurze Übergangsabschnitte, welche beispielsweise in Form einer jeweiligen fertigungstechnisch bedingten Ausrundung mit einem sehr kleinen Radius in der Größenordnung von 1 mm ausgebildet sein können. Der Radius des Kreisbogenabschnitts ist bevorzugt über die Länge des Kreisbogens konstant. Grundsätzlich kann der Radius des Kreisbogenabschnitts aber auch in gewissen Grenzen variieren, wobei in dem Fall der Begriff "Kreisbogenabschnitt" nicht im strengen geometrischen Wortsinn auszulegen ist, sondern in diesem Fall den Verlauf der Umfangskontur zumindest näherungsweise beschreibt.

Durch die erfindungsgemäße Ausgestaltung der Umfangskontur der Modulhalterung und dementsprechend auch der Umfangskontur des nachfolgend noch näher erläuterten Kuppelabschnitts eines Kameramoduls wird im Vergleich zu anderen Bauformen eine kompakte Ausgestaltung der mechanischen Schnittstelle zwischen dem Mobilgerät und dem Kameramodul verwirklicht, wobei dennoch eine verdrehsichere Kopplung gewährleistet ist.

Gemäß einer vorteilhaften Ausführungsform des Mobilgeräts beträgt der Winkel, über welchem sich der Kreisbogenabschnitt erstreckt, wenigstens 270°, bevorzugt wenigstens 300°, besonders bevorzugt wenigstens 315°.

Erfindungsgemäß weist der Kreisbogenabschnitt einen Rastabschnitt und der Sekantenabschnitt einen Hinterschneidungsabschnitt auf, wobei der Rastabschnitt mit einem Rastabschnitt des Kameramoduls und der Hinterschneidungsabschnitt mit einem Hinterschneidungsabschnitt des Kameramoduls zusammenwirkt, wenn das Kameramodul mit dem Mobilgerät verbunden ist. Dadurch wird eine stabile Verbindung zwischen der Modulhalterung und dem Kameramodul geschaffen, die dennoch einfach herzustellen und wieder zu lösen ist. Zum Herstellen der Verbindung wird das Kameramodul zunächst schräg mit seinem Hinterschneidungsabschnitt in den Hinterschneidungsabschnitt der Modulhalterung eingehängt oder eingehakt. Anschließend werden durch eine Kippbewegung die Rastabschnitte miteinander in Eingriff gebracht. Das Lösen erfolgt in umgekehrter Reihenfolge, d.h. zunächst werden unter einem leichten Verkippen die Rastabschnitte außer Eingriff gebracht und anschließend der Hinterschneidungsabschnitt des Kameramoduls aus dem Hinterschneidungsabschnitt der Modulhalterung ausgehängt oder ausgehakt.

Gemäß einer weiteren vorteilhaften Ausführungsform des Mobilgeräts sind der Rastabschnitt und der Hinterschneidungsabschnitt der Modulhalterung an einer Umfangswandung, bevorzugt an einer die Vertiefung umgrenzenden Innenumfangswandung, der Modulhalterung vorgesehen. Bei einer derartigen Ausgestaltung kann der Boden der Vertiefung der Modulhalterung frei von Befestigungs- oder Koppelelementen sein.

Vorteilhafterweise erstreckt sich der Hinterschneidungsabschnitt der Modulhalterung über die gesamte Länge des zugeordneten Sekantenabschnitts. Alternativ oder zusätzlich erstreckt sich der Rastabschnitt der Modulhalterung über einen Teilabschnitt, bevorzugt über einen dem Sekantenabschnitt gegenüberliegenden Teilabschnitt, des zugeordneten Kreisbogenabschnitts. Beispielsweise kann sich der Rastabschnitt über 25 bis 75% der Bogenlänge bzw. des Winkelbereichs des Kreisbogenabschnitts erstrecken.

Gemäß einer weiteren vorteilhaften Ausführungsform des Mobilgeräts ist der Rastabschnitt der Modulhalterung als wenigstens eine starre Rastnase ausgebildet, welche bevorzugt dazu eingerichtet ist, mit einem jeweiligen zugeordneten, am Kuppelabschnitt des Kameramoduls vorgesehenen Rastabschnitt, bevorzugt einem federnden oder federnd gelagerten Rastelement zusammenzuwirken. Alternativ dazu kann der Rastabschnitt der Modulhalterung als wenigstens ein federndes oder federnd gelagertes Rastelement ausgebildet sein, welches bevorzugt dazu eingerichtet ist, mit einem jeweiligen zugeordneten, am Kuppelabschnitt des Kameramoduls vorgesehenen Rastabschnitt, bevorzugt einer starren Rastnase zusammenzuwirken. Bei beiden Alternativen wirkt ein jeweiliges Rastelement mit einer zugeordneten Rastnase zusammen.

Die Rastnase kann auch als lateral ausgedehnter durchgehender Wulst ausgebildet sein, welcher mit mehreren Rastelementen zusammenwirkt.

Vorteilhafterweise ist die Rastnase an der Modulhalterung und dementsprechend das Rastelement an dem Kuppelabschnitt vorgesehen, so dass vermieden wird, dass sich bewegliche und daher besonders empfindliche Teile an der Modulhalterung befinden. Dadurch wird die Gefahr von Beschädigungen an der Modulhalterung verringert, wenn das Mobilgerät ohne ein verbundenes Kameramodul genutzt wird, welches ansonsten die beweglichen Teile verdecken oder umgrenzen würde.

Gemäß einer weiteren vorteilhaften Ausführungsform des Mobilgeräts weist die Modulhalterung mehrere elektrische Kontaktelemente auf, welche dazu eingerichtet sind, mit zugeordneten, am Kuppelabschnitt eines verbundenen Kameramoduls vorgesehenen elektrischen Kontaktelementen zusammenzuwirken, um eine elektrische Schnittstelle zum Übermitteln von elektrischen Signalen und Betriebsströmen zwischen dem Mobilgerät und dem Kameramodul bereitzustellen, wobei bevorzugt die Kontaktelemente der Modulhalterung an einer Bodenfläche der Vertiefung vorgesehen sind. Die hierdurch bereitgestellte elektrische Schnittstelle dient insbesondere zum Übertragen einer Versorgungsspannung und von Steuersignalen vom Mobilgerät an das Kameramodul und zum Übertragen von Bildsignalen vom Kameramodul an das Mobilgerät, so dass die Bildsignale im Mobilgerät weiterverarbeitet und/oder gespeichert werden können und/oder von dem Mobilgerät gegebenenfalls an weitere entfernte Geräte übermittelt werden können. Auch weitere Daten, insbesondere Metadaten, wie Einstellwerte des Kameramoduls, können über die elektrische Schnittstelle übertragen werden.

Die Anordnung der Kontaktelemente der Modulhalterung an der Bodenfläche der Vertiefung sorgt insbesondere im Zusammenwirken mit der Anordnung der Rast- und Hinterschneidungsabschnitte an der Umfangswandung der Modulhalterung für eine gute räumliche Trennung zwischen dem mechanischen Teil und dem elektrischen Teil der Schnittstelle zwischen der Modulhalterung und dem Kameramodul.

Vorteilhafterweise sind die Kontaktelemente der Modulhalterung als starre Kontaktelemente, bevorzugt als plane Kontaktflächen ausgebildet. Diese Ausgestaltung trägt ebenfalls dazu bei, dass an der Modulhalterung selbst keine beweglichen Teile vorgesehen werden müssen, wodurch ebenfalls die Gefahr von Beschädigungen reduziert wird, wenn das Modulgerät ohne verbundenes Kameramodul genutzt wird.

Gemäß einer weiteren vorteilhaften Ausführungsform des Mobilgeräts sind die Kontaktelemente der Modulhalterung innerhalb der Umfangskontur entlang einer, bevorzugt mit gleichbleibendem Abstand zur Umfangskontur verlaufenden Kurve angeordnet. Die Kurve weist entsprechend der Umfangskontur ebenfalls einen kreisbogenförmigen Abschnitt und einen linear verlaufenden, sekantenförmigen Abschnitt auf.

Vorteilhafterweise weist das Mobilgerät einen Montagerahmen auf, welcher als Halterung für mehrere Komponenten des Mobilgeräts ausgebildet ist, wobei das Mobilgerät einen unmittelbar an dem Montagerahmen befestigten Kameramodulträger umfasst, welcher die Modulhalterung aufweist. Die Modulhalterung kann lösbar, bevorzugt austauschbar, an dem übrigen Kameramodulträger befestigt sein. Der Kameramodulträger dient dazu, die von einem angekoppelten Kameramodul auf die Modulhalterung ausgeübten Kräfte zuverlässig auf den in der Regel als Metallteil ausgebildeten, sehr stabilen Montagerahmen zu übertragen. Dadurch wird eine sichere Verbindung zwischen dem Kameramodul und dem Mobilgerät gewährleistet und die Gefahr einer Beschädigung des Modulgeräts, insbesondere eines Abreißens oder Ausreißens der Modulhalterung wesentlich reduziert wird.

Bei dem erfindungsgemäßen Kameramodul ist vorgesehen, dass der Kuppelabschnitt eine Umfangskontur aufweist, die durch einen Kreisbogenabschnitt und einen Sekantenabschnitt gebildet ist. Die Umfangskontur des Kuppelabschnitts ist bevorzugt komplementär zu der Umfangskontur der Modulhalterung ausgebildet, so dass eine problemlose Kopplung zwischen dem Kameramodul und dem Mobilgerät möglich wird.

Nachfolgend werden vorteilhafte Ausgestaltungen des Kameramoduls beschrieben, wobei vorstehend beschriebene Vorteile von jeweils korrespondierenden vorteilhaften Ausgestaltungen des Mobilgeräts in analoger Weise auch für die vorteilhaften Ausgestaltungen des Kameramoduls gelten, auch wenn diese Vorteile nachfolgend nicht ausdrücklich genannt werden. Weitere vorteilhafte Ausgestaltungen und Vorteile ergeben sich zusätzlich auch aus Kombinationen von vorteilhaften Ausgestaltungen des Kameramoduls und vorteilhaften Ausgestaltungen des Mobilgeräts.

Gemäß einer vorteilhaften Ausführungsform des Kameramoduls beträgt der Winkel, über welchen sich der Kreisbogenabschnitt erstreckt, wenigstens 270°, bevorzugt wenigstens 300°, besonders bevorzugt wenigstens 315°.

Gemäß einer erfindungsgemäßen Ausführungsform des Kameramoduls weist der Kreisbogenabschnitt einen Rastabschnitt und der Sekantenabschnitt einen Hinterschneidungsabschnitt auf, wobei der Rastabschnitt dazu eingerichtet ist, mit einem Rastabschnitt der Modulhalterung zusammenzuwirken, und wobei der Hinterschneidungsabschnitt dazu eingerichtet ist, mit einem Hinterschneidungsabschnitt der Modulhalterung zusammenzuwirken, wenn das Kameramodul mit dem Mobilgerät verbunden ist.

Vorteilhafterweise sind der Rastabschnitt und der Hinterschneidungsabschnitt des Kuppelabschnitts an einer Umfangswandung, bevorzugt an einer Außenumfangswandung, des Kuppelabschnitts vorgesehen. Somit ist die Stirnseite des Kuppelabschnitts frei von Befestigungs- oder Koppelelementen.

Gemäß einer weiteren vorteilhaften Ausführungsform des Kameramoduls erstreckt sich der Hinterschneidungsabschnitt des Kuppelabschnitts über die gesamte Länge des zugeordneten Sekantenabschnitts. Alternativ oder zusätzlich erstreckt sich der Rastabschnitt des Kuppelabschnitts über einen Teilabschnitt, bevorzugt über einen dem Sekantenabschnitt gegenüberliegenden Teilabschnitt, des zugeordneten Kreisbogenabschnitts. In korrespondierender Weise erstreckt sich der Rastabschnitt des Kuppelabschnitts vorteilhafterweise über 25 bis 75% der Bogenlänge bzw. des Winkelbereichs des Kreisbogenabschnitts.

Vorteilhafterweise ist der Rastabschnitt des Kuppelabschnitts als wenigstens ein federndes oder federnd gelagertes Rastelement ausgebildet, welches bevorzugt dazu eingerichtet ist, mit einem jeweiligen zugeordneten, an der Modulhalterung vorgesehenen Rastabschnitt, bevorzugt einer starren Rastnase, zusammenzuwirken. Alternativ kann der Rastabschnitt des Kuppelabschnitts als wenigstens eine starre Rastnase ausgebildet sein, welche bevorzugt dazu eingerichtet ist, mit einem jeweiligen zugeordneten, an der Modulhalterung vorgesehenen Rastabschnitt, bevorzugt einem federnden oder federnd gelagerten Rastelement, zusammenzuwirken. Demnach können ein oder mehrere Rastelemente vorgesehen sein.

Wenn gemäß der ersten Alternative das Rastelement an dem Kuppelabschnitt und dementsprechend die Rastnase an der Modulhalterung vorgesehen ist, trägt dies dazu bei, dass sich in vorteilhafter Weise an der Modulhalterung keine beweglichen Teile befinden müssen, so dass die Gefahr von Beschädigungen bei einer Nutzung des Mobilgeräts ohne verbundenes Kameramodul reduziert wird.

Gemäß einer weiteren vorteilhaften Ausführungsform weist der Kuppelabschnitt mehrere elektrische Kontaktelemente auf, welche dazu eingerichtet sind, mit zugeordneten, an der Modulhalterung eines verbundenen Mobilgeräts vorgesehenen elektrischen Kontaktelementen zusammenzuwirken, um eine elektrische Schnittstelle zum Übermitteln von elektrischen Signalen und Betriebsströmen zwischen dem Mobilgerät und dem Kameramodul bereitzustellen, wobei bevorzugt die Kontaktelemente des Kuppelabschnitts an der Stirnseite des Kuppelabschnitts vorgesehen sind. Bei der genannten Stirnseite des Kuppelabschnitts handelt es sich um eine einer Lichteintrittsöffnung des Kameramoduls gegenüberliegende Fläche, welche vorzugsweise parallel zu der Bodenfläche der Vertiefung der Modulhalterung verläuft, wenn das Kameramodul mit dem Mobilgerät verbunden ist.

Vorteilhafterweise sind die Kontaktelemente des Kuppelabschnitts als federnde oder federnd gelagerte Kontaktelemente, bevorzugt als Kontaktstifte oder Kontaktfedern, ausgebildet. Die Kontaktelemente des Kuppelabschnitts sind bevorzugt in axialer Richtung, d.h. in Richtung einer optischen Achse des Kameramoduls, versetzbar gelagert. Hierdurch wird ein zuverlässiger Kontakt mit den Kontaktelementen der Modulhalterung gewährleistet. Die Anordnung von federnd oder federnd gelagerten Kontaktelementen am Kuppelabschnitt des Kameramoduls gestattet es, die korrespondierenden Kontaktelemente der Modulhalterung starr auszubilden, was wiederum dazu beiträgt, die Modulhalterung frei von beweglichen Teilen zu halten, um die Beschädigungsgefahr beim nicht angekoppelten Kameramodul zu reduzieren.

Gemäß einer weiteren vorteilhaften Ausführungsform des Kameramoduls sind die Kontaktelemente des Kuppelabschnitts innerhalb der Umfangskontur entlang einer bevorzugt mit gleichbleibendem Abstand zur Umfangskontur verlaufenden Kurve angeordnet.

Die Erfindung betrifft ferner ein Mobilgerätsystem, welches ein Mobilgerät gemäß einer der erfindungsgemäßen oder vorteilhaften Ausführungsformen und wenigstens ein mit dem Mobilgerät lösbar verbundenes oder verbindbares Kameramodul nach einer der erfindungsgemäßen oder vorteilhaften Ausführungsformen umfasst.

Weitere vorteilhafte Ausführungsformen des Mobilgeräts, des Kameramoduls und des Mobilgerätsystems ergeben sich aus den Unteransprüchen, der Beschreibung und den Zeichnungen.

Die Erfindung wird nachfolgend anhand eines Ausführungsbeispiels mit Bezug auf die Zeichnungen beschrieben.
- Fig. 1: eine perspektivische Ansicht eines Mobilgeräts gemäß einem Ausführungsbeispiel;
- Fig. 2: eine perspektivische Ansicht eines Kameramoduls gemäß einem Ausführungsbeispiel;
- Fig. 3: eine perspektivische Innenansicht des Mobilgeräts von Fig. 1;
- Fig. 4: eine Explosionsansicht eines Kameramodulträgers;
- Fig. 5: eine perspektivische Innenansicht einer mit dem Kameramodulträger von Fig. 4 verbundenen Rückschale für ein Mobilgerät;
- Fig. 6: eine weitere perspektivische Ansicht des Mobilgeräts von Fig. 1;
- Fig. 7 und 8: Querschnitte durch ein Kameramodul und eine Modulhalterung in verschiedenen Montagepositionen; und
- Fig. 9: einen Querschnitt durch ein Kameramodul und eine Modulhalterung in verbundener Position gemäß einer Abwandlung.

Im Folgenden sind gleiche oder gleichartige Elemente mit gleichen Bezugszeichen versehen.

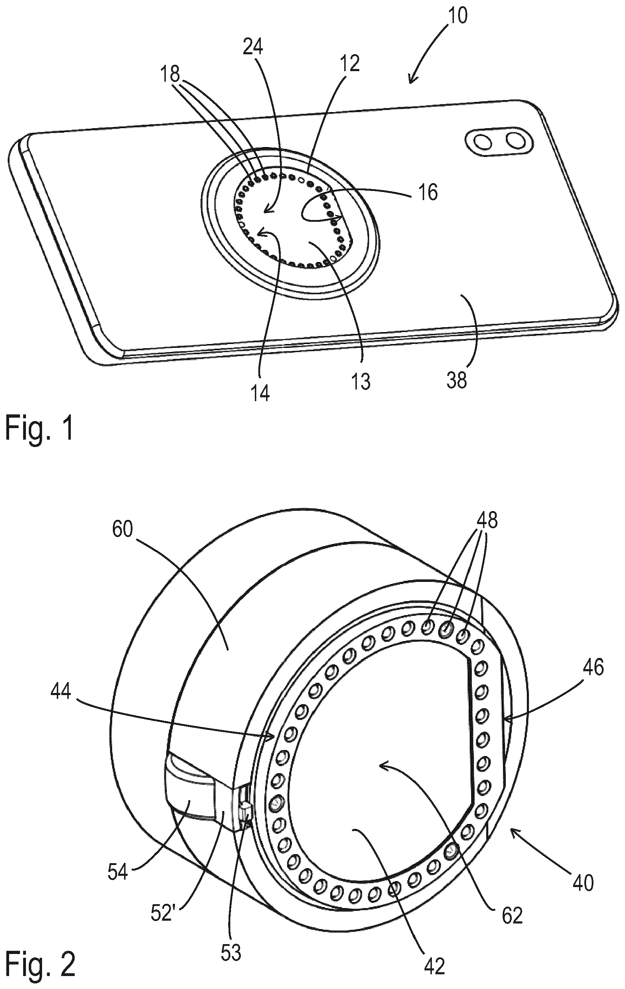

In Fig. 1 ist ein Mobilgerät 10 dargestellt, welches im vorliegenden Ausführungsbeispiel als ein Mobiltelefon oder Smartphone ausgestaltet ist. Grundsätzlich kann die vorliegende Erfindung auch mit anderen Arten von Mobilgeräten, wie beispielsweise tragbaren Kleincomputern, die auch als Tablet-Computer bezeichnet werden, verwendet werden.

Fig. 1 zeigt das Mobilgerät 10 von seiner Rückseite, d.h. der einem Bildschirm des Mobilgeräts 10 gegenüberliegenden Seite. Das Mobilgerät 10 weist ein Gehäuse auf, welches eine Rückschale 38 umfasst. Ungefähr in der Mitte der Rückschale 38 befindet sich eine kreisförmige Aussparung, in welcher eine Modulhalterung 12 angeordnet ist. Die Außenkontur der Modulhalterung 12 ist ebenfalls kreisförmig.

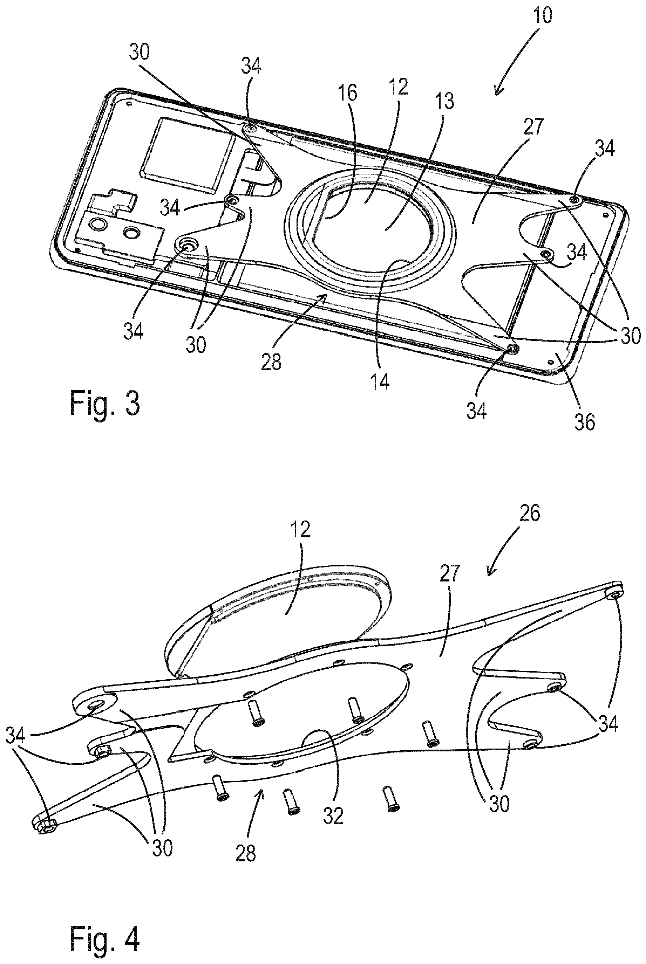

Die Modulhalterung 12 weist eine zur Außenseite des Mobilgeräts 10 weisende Vertiefung 13 auf, die von einer Umfangskontur umgrenzt ist, wobei die Umfangskontur einen Kreisbogenabschnitt 14 und einen geradlinig verlaufenden Sekantenabschnitt 16 aufweist. Der Kreisbogenabschnitt 14 und der Sekantenabschnitt 16 definieren sozusagen Umfangswandungen, welche die Vertiefung 13 seitlich umgrenzen. Weitere Details der Modulhalterung 12 sind auch aus Fig. 3, 6, 7 und 8 ersichtlich.

Die Vertiefung 13 weist eine Bodenfläche 24 auf, in welcher mehrere elektrische Kontaktelemente 18 eingelassen sind. Die elektrischen Kontaktelemente 18 können beispielsweise als plane Kontaktflächen ausgebildet sein. Die Kontaktelemente 18 sind innerhalb der Umfangskontur entlang einer mit gleichbleibendem Abstand zur Umfangskontur verlaufenden Kurve verteilt angeordnet.

In Fig. 2 ist ein Kameramodul 40 dargestellt, welches mittels der Modulhalterung 12 lösbar mit dem Mobilgerät 10 verbindbar ist. Das Kameramodul 40 kann einen Bildsensor, welcher zum Erfassen von Still- oder Bewegtbildern eingerichtet ist, sowie ein Objektiv mit einer oder mehreren Linsen zum Erzeugen von Bildern auf dem Bildsensor umfassen. Der Bildsensor und das Objektiv sind in den Zeichnungen aus Gründen der Vereinfachung nicht dargestellt.

Das Kameramodul 40 weist einen annähernd zylindrischen Körper 60 auf, an dessen einer einer Lichteintrittsöffnung gegenüberliegenden Stirnfläche sich ein etwas in axialer Richtung hervorstehender Kuppelabschnitt 42 anschließt. Der Kuppelabschnitt 42 weist eine Umfangskontur auf, die gegenüber einer Umfangskontur des Körpers 60 etwas nach innen zurückversetzt ist und sich aus einem Kreisbogenabschnitt 44 und einem Sekantenabschnitt 46 zusammensetzt.

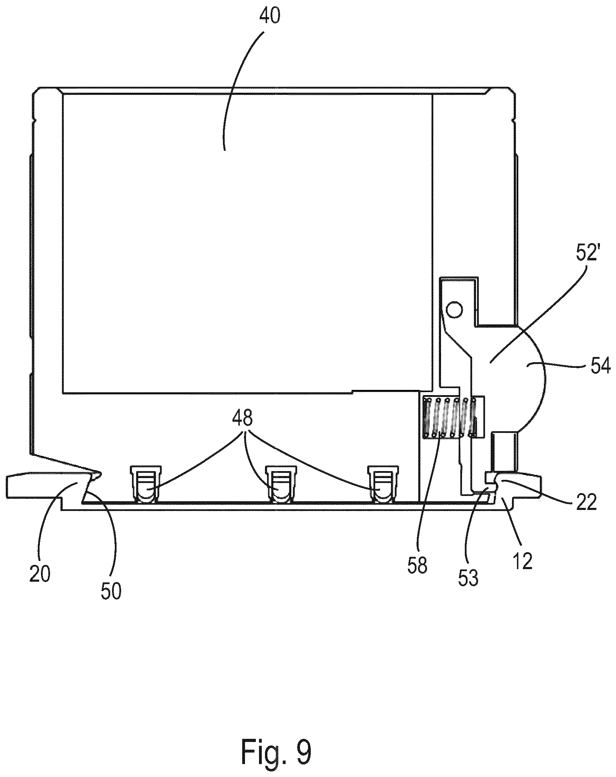

Der Kreisbogenabschnitt 44 und der Sekantenabschnitt 46 des Kameramoduls 40 sind so auf den Kreisbogenabschnitt 14 und den Sekantenabschnitt 16 der Modulhalterung 12 (Fig. 1, 6, 7 und 8) abgestimmt, dass der Kuppelabschnitt 42 in der Vertiefung 13 aufgenommen und mit der Modulhalterung 12 verrastet werden kann, um das Kameramodul 40 mit dem Mobilgerät 10 zu verbinden. Die Ausgestaltung des Kuppelabschnitts 42 entspricht der mit Bezug auf Fig. 9 beschriebenen Abwandlung.

An einer Stirnseite 62 des Kuppelabschnitts 42 sind Kontaktelemente 48 angeordnet, welche hinsichtlich ihrer Anzahl und Positionierung mit den Kontaktelementen 18 der Modulhalterung korrespondieren, so dass ein jeweiliges Kontaktelement 48 des Kameramoduls 40 mit einem zugeordneten Kontaktelement 18 der Modulhalterung 12 in elektrischen Kontakt treten kann. Die Kontaktelemente 48 können beispielsweise als federnde Kontaktstifte ausgebildet sein, um den für einen zuverlässigen elektrischen Kontakt notwendigen Anpressdruck aufzubringen, wenn das Kameramodul 40 mit dem Mobilgerät 10 verbunden ist.

Die Kontaktelemente 18, 48 definieren eine elektrische Schnittstelle zwischen dem Kameramodul 40 und dem Mobilgerät 10, über welche Steuersignale vom Mobilgerät 10 an das Kameramodul 40 übertragen werden können und von dem Bildsensor erzeugte Bildsignale von dem Kameramodul 40 an das Mobilgerät 10 übertragen werden können. Weiterhin kann auch eine von einem Akkumulator des Mobilgeräts 10 bereitgestellte Versorgungsspannung an das Kameramodul 40 übertragen werden, falls das Kameramodul 40 über keine eigene Spannungsversorgung verfügt.

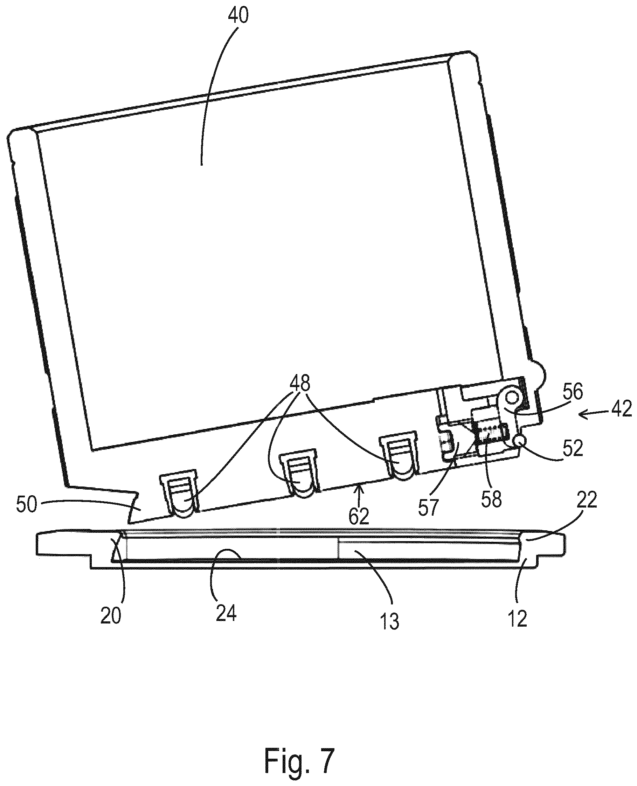

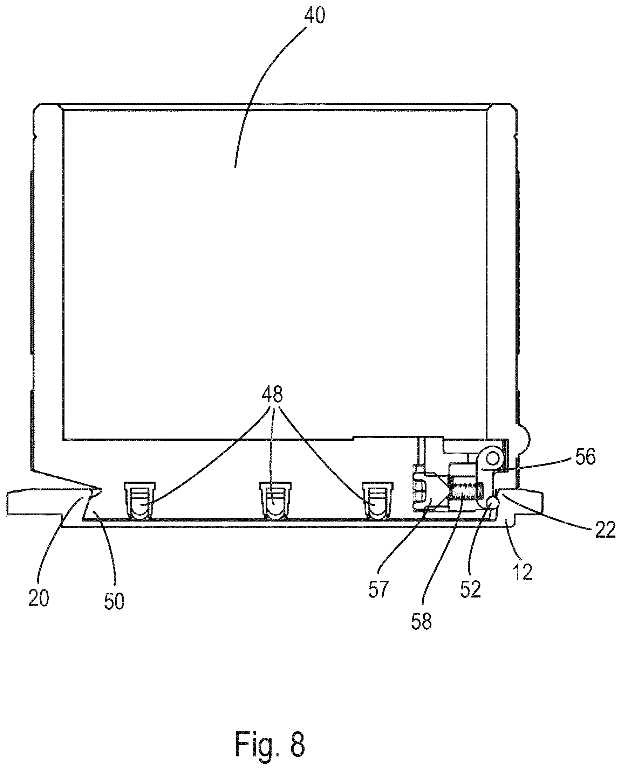

Mit Bezug auf Fig. 7 und 8 wird nun der Aufbau der mechanischen Schnittstelle zwischen dem Kameramodul 40 und dem Mobilgerät 10 näher erläutert. Aus Gründen der Übersichtlichkeit ist das Kameramodul 40 etwas vereinfacht und mit Ausnahme von einigen beispielhaft dargestellten Kontaktelementen 48 ohne elektrische und optische Komponenten dargestellt. Vom Mobilgerät 10 ist lediglich die Modulhalterung 12 gezeigt, wobei wie auch beim Kameramodul 40 die elektrischen Kontaktelemente der besseren Übersicht wegen nicht dargestellt sind.

Die Sekantenabschnitte 16, 46 der Modulhalterung 12 bzw. des Kameramoduls 40 weisen über einen Großteil ihrer Länge jeweilige Hinterschneidungsabschnitte 20, 50 auf, welche miteinander zusammenwirken. In einem Teilbereich des Kreisbogenabschnitts 14 der Modulhalterung 12 ist ein als wulstförmige Rastnase 22 ausgebildeter Rastabschnitt vorgesehen, welcher von der Bodenfläche 24 beabstandet entlang einer Umfangswandung der Vertiefung 13 verläuft. Um ein problemloses Einsetzen des Kuppelabschnitts 42 in die Vertiefung 13 zu ermöglichen, erstreckt sich die wulstförmige Rastnase 22 gegenüberliegend von dem Hinterschneidungsabschnitt 20 über einen Winkelbereich, der etwas weniger als 180° beträgt.

An einer nach außen weisenden Umfangswandung des Kuppelabschnitts 42 ist als komplementärer Rastabschnitt ein beweglich gelagertes, kugelförmiges Rastelement 52 vorgesehen, welches über eine Druckfeder 58 und einen Schwenkarm 56 radial nach außen vorgespannt ist. Die Vorspannung bewirkt einerseits, dass das Rastelement 52 die Rastnase 22 zuverlässig hintergreift und somit ein Herausrutschen des Kameramoduls 40 aus der Modulhalterung 12 vermieden wird. Des Weiteren erzeugt die Kraft der Druckfeder 58 eine Spannkraft, welche die Hinterschneidungsabschnitte 20, 50 in Eingriff hält. Um die durch die Druckfeder 58 erzeugte Vorspannung bzw. Spannkraft und damit die Haltekraft der mechanischen Schnittstelle einstellen zu können, kann durch Verdrehen einer mit der Druckfeder 58 zusammenwirkenden, beispielsweise als Madenschraube ausgestalteten Stellschraube 57 die Vorspannung der Druckfeder 58 verändert werden.

Um das Kameramodul 40 mit dem Mobilgerät 10 bzw. der Modulhalterung 12 zu verbinden oder zu verrasten, wird zunächst das Kameramodul 40 leicht verkippt mit dem Kuppelabschnitt 42 in die Vertiefung 13 eingesetzt, wobei zunächst ein Kontakt zwischen den Hinterschneidungsabschnitten 20, 50 hergestellt wird (vgl. Fig. 7). Anschließend wird das Kameramodul 40 verkippt, so dass das Rastelement 52 über die Rastnase 22 gleitet, wobei beim Passieren der Rastnase 22 das Rastelement 52 entgegen der durch die Druckfeder 58 ausgeübten Kraft etwas in das Innere des Kuppelabschnitts 42 zurückfedert und anschließend die Rastnase 22 hintergreift (vgl. Fig. 8). Zum Lösen oder Entrasten des Kameramoduls 40 wird entgegengesetzt vorgegangen, wobei hierzu ein ausreichendes Kippmoment aufgebracht werden muss, um die durch die Druckfeder 58 ausgeübte Kraft zu überwinden und ein Zurückfedern des Rastelements 52 zu bewirken.

In Fig. 9 ist eine Abwandlung der mit Bezug auf Fig. 7 und 8 beschriebenen mechanischen Schnittstelle zwischen dem Kameramodul 40 und dem Mobilgerät 10 dargestellt. Während die Modulhalterung 12 mit Ausnahme einer leicht abweichenden Konturierung der Rastnase 22 der mit Bezug auf Fig. 7 und 8 beschriebenen Ausgestaltung entspricht, variiert der Kuppelabschnitt 42 bezüglich der nachfolgend beschriebenen Merkmale.

An Stelle des kugelförmigen Rastelements 52 ist ein schwenkbar gelagertes, hebelartiges Rastelement 52' vorgesehen, welches über eine Druckfeder 58 radial nach außen vorgespannt ist. Die Vorspannung bewirkt entsprechend der Ausgestaltung von Fig. 7 und 8, dass ein am Rastelement 52' ausgebildeter Rastabschnitt 53 die Rastnase 22 zuverlässig hintergreift und somit ein Herausrutschen des Kameramoduls 40 aus der Modulhalterung 12 vermieden wird. Des Weiteren erzeugt die Kraft der Druckfeder 58' eine Spannkraft, welche die Hinterschneidungsabschnitte 20, 50 in Eingriff hält.

Während das Verbinden oder Verrasten des Kameramoduls 40 mit der Modulhalterung 12 in gleicher Weise wie bei der Ausgestaltung gemäß Fig. 7 und 8 erfolgen kann, muss zum Lösen des Kameramoduls bei der Abwandlung gemäß Fig. 9 zusätzlich zu einem Kippen des Kameramoduls 40 ein am Rastelement 52' vorgesehener Betätigungsabschnitt 54 gedrückt werden, da aufgrund von unterschiedlichen Konturierungen sich der Rastabschnitts 53 und die Rastnase 22 im Vergleich zur Ausgestaltung gemäß Fig. 7 und 8 derart hintergreifen, dass ein Entrasten ohne ein Drücken des Betätigungselements 54 nicht möglich ist. Durch das Drücken des Betätigungselements 54 wird das Rastelement 52' entgegen der Kraft der Druckfeder 58 etwas in das Innere des Kuppelabschnitts 42 zurück verschwenkt und der Rastabschnitt 53 außer Eingriff mit der Rastnase 22 gebracht.

Da die Konturierungen des Rastabschnitts 53 und der Rastnase 22 so gewählt sind, dass ein Lösen des Kameramoduls 40 von der Modulhalterung 12 ausschließlich durch ein Kippen oder Verkippen nicht möglich ist, ist bei der Ausgestaltung der Schnittstelle gemäß Fig. 9 die Gefahr eines unbeabsichtigten Entkoppelns des Kameramoduls 40 im Vergleich zur Ausgestaltung gemäß Fig. 7 und 8 verringert.

Nachfolgend wird mit Bezug auf Fig. 3 bis 6 näher erläutert, auf welche Weise die Modulhalterung 12 mit dem übrigen Mobilgerät 10 verbunden ist. Das Mobilgerät 10 weist einen Montagerahmen 36 auf, welcher vorzugsweise aus Metall hergestellt ist und sich im Wesentlichen im Inneren des Mobilgeräts 10 erstreckt. In Abhängigkeit von der Konstruktion können Teilabschnitte des Montagerahmens 36 von außen sichtbar sein und somit die Schmalseite des Mobilgeräts 10 definieren. Insbesondere können in diesem Bereich Bedienelemente wie Tasten oder elektrische Anschlüsse vorgesehen sein. Der Montagerahmen 36 dient als Träger für verschiedene Komponenten des Mobilgeräts 10, beispielsweise elektrische Bauteile, Platinen, weitere Kameras, einen Akkumulator zur Stromversorgung, Funkmodule und dergleichen.

Im vorliegenden Ausführungsbeispiel ist die Modulhalterung 12 Teil eines Kameramodulträgers 26, der mit dem Montagerahmen 36 verbunden ist. Wie insbesondere in Fig. 3 und 4 gut zu erkennen ist, weist der Kameramodulträger 26 einen Zentralbereich 28 auf, in dem die Modulhalterung 12 vorgesehen ist. Im vorliegenden Ausführungsbeispiel ist der Kameramodulträger 26 mehrteilig ausgebildet und umfasst neben der Modulhalterung 12 eine Trägerplatte 27, in der eine kreisförmige Aufnahme 32 für die Modulhalterung 12 ausgebildet ist. Dabei ist die Modulhalterung 12 mit der Trägerplatte 27 verschraubt, so dass ein Auswechseln der Modulhalterung 12, beispielsweise bei Beschädigungen oder einem aus anderen Gründen erforderlichen Austausch, vorgenommen werden kann. Gemäß einer nicht dargestellten Abwandlung kann die Modulhalterung 12 jedoch auch integral in dem Kameramodulträger 26 ausgebildet sein.

Der Kameramodulträger 26 bzw. die Trägerplatte 27 weist sechs fingerartige Streben 30 auf, welche sich ausgehend von dem Zentralbereich 28 weg erstrecken und sich zu ihrem distalen Ende hin verjüngen. An den distalen Endpunkten der Streben 30 sind jeweilige Befestigungspunkte 34 vorgesehen, welche Bohrungen zur Aufnahme von Befestigungsschrauben sowie zumindest teilweise flanschartige Verdickungen aufweisen, um einen gewünschten Abstand zwischen dem Montagerahmen 36 und dem Kameramodulträger herzustellen, so dass zwischen dem Montagerahmen 36 und dem Kameramodulträger 26 noch ein ausreichender Bauraum zur Aufnahme von weiteren Komponenten des Mobilgeräts 10 zur Verfügung steht.

Die spinnenartige Ausgestaltung des Kameramodulträgers 16 bzw. der Trägerplatte 27 mit zwischen den Streben 30 verlaufenden Freiräumen stellt zum einen sicher, dass ausreichend Bauraum für weitere Komponenten des Mobilgeräts 10 zur Verfügung steht und nicht unnötig von dem Kameramodulträger 26 beansprucht wird. Weiterhin kann durch diese Ausgestaltung das Gewicht des Kameramodulträgers 26 auf ein notwendiges Maß reduziert werden. Falls der Kameramodulträger 26 aus Metall gefertigt ist, kann durch die schlanke spinnenförmige Ausgestaltung eine Beeinträchtigung der Empfangswege für Funksignale durch Abschirmungs- und/oder Reflexionseffekte reduziert werden.

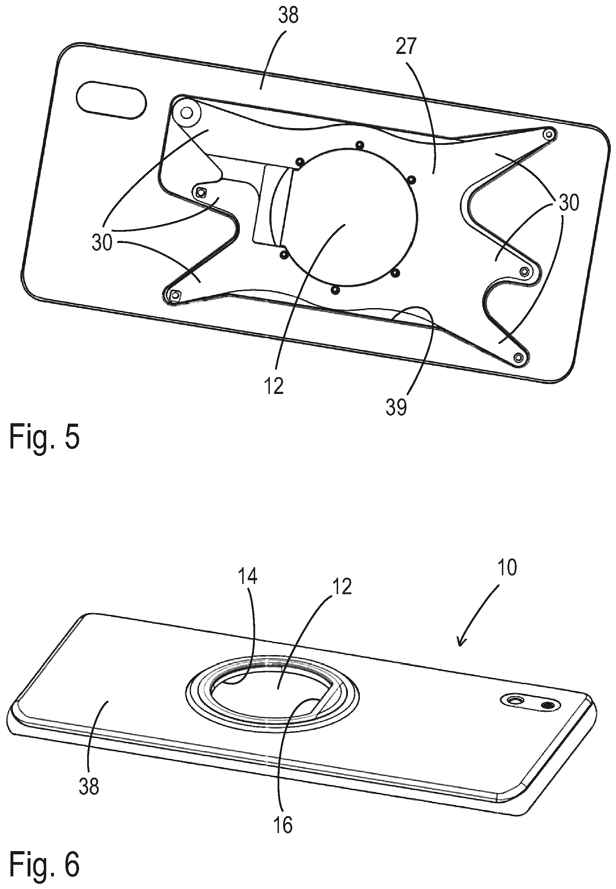

Mit Bezug auf Fig. 5 und 6 wird nun näher erläutert, wie die Rückschale 38 und der Kameramodulträger 26 mit dem Montagerahmen 36 verbunden werden können.

Die Rückschale 38, welche beispielsweise aus einem stabilen Kunststoffmaterial hergestellt sein kann, weist in einem Überdeckungsbereich mit dem Modulträger 26 eine Eintiefung 39 auf, in welcher die Materialstärke der Rückschale 38 etwas verringert ist. Die Kontur der Eintiefung 39 folgt weitgehend der Außenkontur des Kameramodulträgers 26.

Der Kameramodulträger 26 kann zunächst an dem Montagerahmen 36 befestigt werden, insbesondere mit dem Montagerahmen 36 verschraubt werden. Hierzu können Befestigungsschrauben durch die Bohrungen in den Befestigungspunkten 34 des Kameramodulträgers 26 hindurchgeführt und in entsprechenden, am Montagerahmen 36 vorgesehenen Gewindebohrungen verschraubt werden. Die den Kameramodulträger 26 überdeckende Rückschale 38 wird danach ebenfalls an dem Montagerahmen 36 befestigt, was zum Beispiel durch Verschrauben, insbesondere von innen, Verrasten oder Verkleben erfolgen kann. Zur weiteren Erhöhung der Stabilität kann die Rückschale 38 zusätzlich mit dem Kameramodulträger 26 verklebt werden.

Gemäß einer Abwandlung kann die Rückschale 38 auch gemeinsam mit dem Kameramodulträger 26 mit dem Montagerahmen 36 verbunden werden. Die Rückschale 38 kann Bohrungen aufweisen, die mit den Bohrungen in den Befestigungspunkten 34 des Kameramodulträgers 26 fluchten. Die Befestigung der Rückschale 38 und des Kameramodulträgers 26 erfolgt derart, dass von einer Außenseite der Rückschale 38 hindurch Befestigungsschrauben durch die Bohrungen hindurchgeführt werden und in entsprechenden, am Montagerahmen 36 vorgesehenen Gewindebohrungen verschraubt werden. Mit Hilfe dieser Befestigungsschrauben wird somit der Modulträger gemeinsam mit der Rückschale 38 an dem Montagerahmen 36 festgelegt. Zusätzlich kann eine Verklebung zwischen der Rückschale 38 und dem Kameramodulträger 26 vorgesehen sein. Wenn die Rückschale 38 und der Kameramodulträger 26 miteinander verklebt sind, können die Bohrungen in der Rückschale 38 dabei auch so groß aufgeführt werden, dass die Köpfe der Befestigungsschrauben keine formschlüssige Verbindung mit der Rückschale 38 eingehen, sondern die Bohrungen in der Rückschale 38 sozusagen als Einsenkungen ausgebildet sind, um die Schraubenköpfe bündig mit oder versenkt zu der Außenfläche der Rückschale 38 aufzunehmen. Um die Bohrungen für die Befestigungsschrauben zu überdecken, kann die Außenseite der Rückschale 38 mit einem Bezug oder einer Folie versehen sein, welche die Bohrungen überdeckt, um das Eindringen von Schmutz oder Feuchtigkeit in das Innere des Mobilgeräts 10 zu verhindern.

### Bezugszeichenliste

- 10: Mobilgerät
- 12: Modulhalterung
- 13: Vertiefung
- 14: Kreisbogenabschnitt
- 16: Sekantenabschnitt
- 18: Kontaktelement
- 20: Hinterschneidungsabschnitt
- 22: Rastnase
- 24: Bodenfläche
- 26: Kameramodulträger
- 27: Trägerplatte
- 28: Zentralbereich
- 30: Strebe
- 32: Aufnahme
- 34: Befestigungspunkt
- 36: Montagerahmen
- 38: Rückschale
- 39: Eintiefung

- 40: Kameramodul
- 42: Kuppelabschnitt
- 44: Kreisbogenabschnitt
- 46: Sekantenabschnitt
- 48: Kontaktelement
- 50: Hinterschneidungsabschnitt
- 52, 52': Rastelement
- 53: Rastabschnitt
- 54: Betätigungsabschnitt
- 56: Schwenkarm
- 57: Stellschraube
- 58: Druckfeder
- 60: Körper
- 62: Stirnseite

## Patentansprüche

1. Mobilgerät (10), bevorzugt Mobiltelefon, mit einer Modulhalterung (12) für ein einen Kuppelabschnitt (42) aufweisendes, lösbar mit der Modulhalterung (12) verbindbares Kameramodul (40) zum Erfassen von Still- und/oder Bewegtbildern,
wobei die Modulhalterung (12) eine Vertiefung (13) aufweist, in welcher der Kuppelabschnitt (42) aufgenommen ist, wenn das Kameramodul (40) mit dem Mobilgerät (10) verbunden ist,
wobei die Vertiefung (13) der Modulhalterung (12) eine Umfangskontur aufweist, die durch einen Kreisbogenabschnitt (14) und einen Sekantenabschnitt (16) gebildet ist,
**dadurch gekennzeichnet, dass**
der Kreisbogenabschnitt (14) einen Rastabschnitt (22) und der Sekantenabschnitt (16) einen Hinterschneidungsabschnitt (20) aufweist, wobei der Rastabschnitt (22) mit einem Rastabschnitt (52) des Kameramoduls (40) und der Hinterschneidungsabschnitt (20) mit einem Hinterschneidungsabschnitt (50) des Kameramoduls (40) zusammenwirkt, wenn das Kameramodul (40) mit dem Mobilgerät (10) verbunden ist.

2. Mobilgerät (10) nach Anspruch 1,
**dadurch gekennzeichnet,**
**dass** der Winkel, über welchen sich der Kreisbogenabschnitt (14) erstreckt, wenigstens 270°, bevorzugt wenigstens 300°, besonders bevorzugt wenigstens 315° beträgt.

3. Mobilgerät (10) nach einem der vorhergehenden Ansprüche,
**dadurch gekennzeichnet,**
**dass** der Rastabschnitt (22) und der Hinterschneidungsabschnitt (20) der Modulhalterung (12) an einer Umfangswandung, bevorzugt an einer die Vertiefung (13) umgrenzenden Innenumfangswandung, der Modulhalterung (12) vorgesehen sind.

4. Mobilgerät (10) nach einem der vorhergehenden Ansprüche,
**dadurch gekennzeichnet,**
**dass** sich der Hinterschneidungsabschnitt (20) der Modulhalterung (12) über die gesamte Länge des zugeordneten Sekantenabschnitts (16) erstreckt, und/oder
**dass** sich der Rastabschnitt (22) der Modulhalterung (12) über einen Teilabschnitt, bevorzugt über einen dem Sekantenabschnitt (16) gegenüberliegenden Teilabschnitt, des zugeordneten Kreisbogenabschnitts (14) erstreckt.

5. Mobilgerät (10) nach einem der vorhergehenden Ansprüche,
**dadurch gekennzeichnet,**
**dass** der Rastabschnitt (22) der Modulhalterung (12) als wenigstens eine starre Rastnase (22) ausgebildet ist, welche bevorzugt dazu eingerichtet ist, mit einem jeweiligen zugeordneten, am Kuppelabschnitt (42) des Kameramoduls (40) vorgesehenen Rastabschnitt (52), bevorzugt einem federnden oder federnd gelagerten Rastelement (52), zusammenzuwirken, oder dass der Rastabschnitt der Modulhalterung (12) als wenigstens ein federndes oder federnd gelagertes Rastelement ausgebildet ist, welches bevorzugt dazu eingerichtet ist, mit einem jeweiligen zugeordneten, am Kuppelabschnitt (42) des Kameramoduls (40) vorgesehenen Rastabschnitt, bevorzugt einer starren Rastnase, zusammenzuwirken.

6. Mobilgerät (10) nach einem der vorhergehenden Ansprüche,
**dadurch gekennzeichnet,**
**dass** die Modulhalterung (12) mehrere elektrische Kontaktelemente (18) aufweist, welche dazu eingerichtet sind, mit zugeordneten, am Kuppelabschnitt (42) eines verbundenen Kameramoduls (40) vorgesehen elektrischen Kontaktelementen (48) zusammenzuwirken, um eine elektrische Schnittstelle zum Übermitteln von elektrischen Signalen und Betriebsströmen zwischen dem Mobilgerät (10) und dem Kameramodul (40) bereitzustellen, wobei bevorzugt die Kontaktelemente (18) der Modulhalterung (12) an einer Bodenfläche (24) der Vertiefung (13) vorgesehen sind.

7. Mobilgerät (10) nach einem der vorhergehenden Ansprüche,
**dadurch gekennzeichnet,**
**dass** das Mobilgerät (10) einen Montagerahmen (36) aufweist, welcher als Halterung für mehrere Komponenten des Mobilgeräts (10) ausgebildet ist, und
**dass** das Mobilgerät (10) einen unmittelbar an dem Montagerahmen (36) befestigten Kameramodulträger (26) umfasst, welcher die Modulhalterung (12) aufweist.

8. Kameramodul (40) zum Erfassen von Still- und/oder Bewegtbildern für ein eine Modulhalterung (12) aufweisendes Mobilgerät (10), bevorzugt Mobiltelefon, wobei das Kameramodul (40) einen Kuppelabschnitt (42) aufweist, welcher dazu eingerichtet ist, mit der Modulhalterung (12) des Mobilgeräts (10) zusammenzuwirken, um das Kameramodul (40) lösbar mit dem Mobilgerät (10) zu verbinden,
wobei der Kuppelabschnitt (42) in einer Vertiefung (13) der Modulhalterung (12) aufnehmbar ist,
wobei der Kuppelabschnitt (42) eine Umfangskontur aufweist, die durch einen Kreisbogenabschnitt (44) und einen Sekantenabschnitt (46) gebildet ist,
**dadurch gekennzeichnet, dass**
der Kreisbogenabschnitt (44) einen Rastabschnitt (52) und der Sekantenabschnitt (46) einen Hinterschneidungsabschnitt (50) aufweist, wobei der Rastabschnitt (52) dazu eingerichtet ist, mit einem Rastabschnitt (22) der Modulhalterung (12) zusammenzuwirken, und wobei der Hinterschneidungsabschnitt (50) dazu eingerichtet ist, mit einem Hinterschneidungsabschnitt (20) der Modulhalterung (12) zusammenzuwirken, wenn das Kameramodul (40) mit dem Mobilgerät (10) verbunden ist.

9. Kameramodul (40) nach Anspruch 8,
**dadurch gekennzeichnet,**
**dass** der Winkel, über welchen sich der Kreisbogenabschnitt (44) erstreckt, wenigstens 270°, bevorzugt wenigstens 300°, besonders bevorzugt wenigstens 315° beträgt.

10. Kameramodul (40) nach Anspruch 8 oder 9,
**dadurch gekennzeichnet,**
**dass** der Rastabschnitt (52) und der Hinterschneidungsabschnitt (50) des Kuppelabschnitts (42) an einer Umfangswandung, bevorzugt an einer Außenumfangswandung, des Kuppelabschnitts (42) vorgesehen sind.

11. Kameramodul (40) nach einem der Ansprüche 8 bis 10,
**dadurch gekennzeichnet,**
**dass** sich der Hinterschneidungsabschnitt (50) des Kuppelabschnitts (42) über die gesamte Länge des zugeordneten Sekantenabschnitts (46) erstreckt, und/oder
**dass** sich der Rastabschnitt (52) des Kuppelabschnitts (42) über einen Teilabschnitt, bevorzugt über einen dem Sekantenabschnitt (46) gegenüberliegenden Teilabschnitt, des zugeordneten Kreisbogenabschnitts (44) erstreckt.

12. Kameramodul (40) nach einem der Ansprüche 8 bis 11,
**dadurch gekennzeichnet,**
**dass** der Rastabschnitt (52) des Kuppelabschnitts (42) als wenigstens ein federndes oder federnd gelagertes Rastelement (52) ausgebildet ist, welches bevorzugt dazu eingerichtet ist, mit einem jeweiligen zugeordneten, an der Modulhalterung (12) vorgesehenen Rastabschnitt (22), bevorzugt einer starren Rastnase (22), zusammenzuwirken, oder
**dass** der Rastabschnitt des Kuppelabschnitts (42) als wenigstens eine starre Rastnase ausgebildet ist, welche bevorzugt dazu eingerichtet ist, mit einem jeweiligen zugeordneten, an der Modulhalterung (12) vorgesehenen Rastabschnitt, bevorzugt einem federnden oder federnd gelagerten Rastelement, zusammenzuwirken.

13. Kameramodul (40) nach einem der Ansprüche 8 bis 12,
**dadurch gekennzeichnet,**
**dass** der Kuppelabschnitt (42) mehrere elektrische Kontaktelemente (48) aufweist, welche dazu eingerichtet sind, mit zugeordneten, an der Modulhalterung (12) eines verbundenen Mobilgeräts (10) vorgesehenen elektrischen Kontaktelementen (18) zusammenzuwirken, um eine elektrische Schnittstelle zum Übermitteln von elektrischen Signalen und Betriebsströmen zwischen dem Mobilgerät (10) und dem Kameramodul (40) bereitzustellen,
wobei bevorzugt die Kontaktelemente (48) des Kuppelabschnitts (42) an der Stirnseite (62) des Kuppelabschnitts (42) vorgesehen sind.

14. Mobilgerätsystem umfassend
ein Mobilgerät (10), bevorzugt Mobiltelefon, nach einem der Ansprüche 1 bis 7,
und wenigstens ein mit dem Mobilgerät (10) lösbar verbundenes oder verbindbares Kameramodul (40) nach einem der Ansprüche 8 bis 13.

## Claims

1. A mobile device (10), preferably a cell phone, comprising a module holder (12) for a camera module (40) for capturing still images and/or moving images, said camera module (40) having a coupling section (42) and being releasably connectable to the module holder (12),
wherein the module holder (12) has a recess (13) in which the coupling section (42) is received when the camera module (40) is connected to the mobile device (10),
wherein the recess (13) of the module holder (12) has a peripheral contour which is formed by a circular arc section (14) and a secant section (16), **characterized in that**
the circular arc section (14) has a latch section (22) and the secant section (16) has an undercut section (20), with the latch section (22) cooperating with a latch section (52) of the camera module (40) and the undercut section (20) cooperating with an undercut section (50) of the camera module (40) when the camera module (40) is connected to the mobile device (10).

2. A mobile device (10) in accordance with claim 1,
**characterized in that**
the angle over which the circular arc section (14) extends amounts to at least 270°, preferably at least 300°, particularly preferably at least 315°.

3. A mobile device (10) in accordance with one of the preceding claims, **characterized in that**
the latch section (22) and the undercut section (20) of the module holder (12) are provided at a peripheral wall, preferably at an inner peripheral wall bounding the recess (13), of the module holder (12).

4. A mobile device (10) in accordance with any one of the preceding claims, **characterized in that**
the undercut section (20) of the module holder (12) extends over the total length of the associated secant section (16), and/or in that the latch section (22) of the module holder (12) extends over a part section, preferably over a part section disposed opposite the secant section (16), of the associated circular arc section (14).

5. A mobile device (10) in accordance with any one of the preceding claims, **characterized in that**
the latch section (22) of the module holder (12) is configured as at least one rigid latch nose (22) which is preferably configured to cooperate with a respective associated latch section (52) provided at the coupling section (42) of the camera module (40), preferably with a resilient or spring supported latch element (52), or
**in that** the latch section of the module holder (12) is configured as at least one resilient or spring supported latch element which is preferably configured to cooperate with a respective associated latch section provided at the coupling section (42) of the camera module (40), preferably with a rigid latch nose.

6. A mobile device (10) in accordance with any one of the preceding claims, **characterized in that**
the module holder (12) has a plurality of electrical contact elements (18) which are configured to cooperate with associated electrical contact elements (48) provided at the coupling section (42) of a connected camera module (40) in order to provide an electrical interface for transmitting electrical signals and operating currents between the mobile device (10) and the camera module (40), with preferably the contact elements (18) of the module holder (12) being provided at a base surface (24) of the recess (13).

7. A mobile device (10) in accordance with any one of the preceding claims, **characterized in that**
the mobile device (10) has an assembly frame (36) which is configured as a holder for a plurality of components of the mobile device (10), and
**in that** the mobile device (10) comprises a camera module carrier (26) which is fastened directly to the assembly frame (36) and which has the module holder (12).

8. A camera module (40) for capturing still images and/or moving images for a mobile device (10), preferably a cell phone, the mobile device (10) having a module holder (12), wherein the camera module (40) has a coupling section (42) which is configured to cooperate with the module holder (12) of the mobile device (10) in order to releasably connect the camera module (40) to the mobile device (10),
wherein the coupling section (42) can be received in a recess (13) of the module holder (12),
wherein the coupling section (42) has a peripheral contour which is formed by a circular arc section (44) and a secant section (46),
**characterized in that**
the circular arc section (44) has a latch section (52) and the secant section (46) has an undercut section (50), with the latch section (52) being configured to cooperate with a latch section (22) of the module holder (12), and with the undercut section (50) being configured to cooperate with an undercut section (20) of the module holder (12) when the camera module (40) is connected to the mobile device (10).

9. A camera module (40) in accordance with claim 8,
**characterized in that**
the angle over which the circular arc section (44) extends amounts to at least 270°, preferably at least 300°, particularly preferably at least 315°.

10. A camera module (40) in accordance with claim 8 or 9,
**characterized in that**
the latch section (52) and the undercut section (50) of the coupling section (42) are provided at a peripheral wall, preferably at an outer peripheral wall, of the coupling section (42).

11. A camera module (40) in accordance with any one of the claims 8 to 10, **characterized in that**
the undercut section (50) of the coupling section (42) extends over the total length of the associated secant section (46), and/or in that the latch section (52) of the coupling section (42) extends over a part section, preferably over a part section disposed opposite the secant section (46), of the associated circular arc section (44).

12. A camera module (40) in accordance with any one of the claims 8 to 11, **characterized in that**
the latch section (52) of the coupling section (42) is configured as at least one resilient or spring supported latch element (52) which is preferably configured to cooperate with a respective associated latch section (22) provided at the module holder (12), preferably with a rigid latch nose (22), or
**in that** the latch section of the coupling section (42) is configured as at least one rigid latch nose which is preferably configured to cooperate with a respective associated latch section provided at the module holder (12), preferably with a resilient or spring supported latch element.

13. A camera module (10, 40) in accordance with any one of the claims 8 to 12, **characterized in that**
the coupling section (42) has a plurality of electrical contact elements (48) which are configured to cooperate with associated electrical contact elements (18) provided at the module holder (12) of a connected mobile device (10) in order to provide an electrical interface for transmitting electrical signals and operating currents between the mobile device (10) and the camera module (40), with preferably the contact elements (48) of the coupling section (42) being provided at the end face (62) of the coupling section (42).

14. A mobile device system comprising
a mobile device (10), preferably a cell phone, in accordance with any one of the claims 1 to 7,
and at least one camera module (40) in accordance with any one of the claims 8 to 13 which is releasably connected or connectable to the mobile device (10).

## Revendications

1. Appareil mobile (10), de préférence téléphone mobile, comprenant un support de module (12) pour un module de caméra (40) destiné à capturer des images fixes et/ou animées, muni d'une partie de couplage (42) et apte à être relié de manière amovible au support de module (12),
le support de module (12) présentant un renfoncement (13) dans lequel la partie de couplage (42) est logée lorsque le module de caméra (40) est relié à l'appareil mobile (10),
le renfoncement (13) du support de module (12) présentant un contour périphérique formé par une portion en arc de cercle (14) et par une portion en sécante (16),
**caractérisé en ce que**
la portion en arc de cercle (14) présente une portion d'encliquetage (22) et la portion en sécante (16) présente une portion en contre-dépouille (20), la portion d'encliquetage (22) coopérant avec une portion d'encliquetage (52) du module de caméra (40), et la portion en contre-dépouille (20) coopérant avec une portion en contre-dépouille (50) du module de caméra (40) lorsque le module de caméra (40) est relié à l'appareil mobile (10).

2. Appareil mobile (10) selon la revendication 1,
**caractérisé en ce que** l'angle sur lequel s'étend la portion en arc de cercle (14) est d'au moins 270°, de préférence d'au moins 300°, de manière particulièrement préférée d'au moins 315°.

3. Appareil mobile (10) selon l'une des revendications précédentes, **caractérisé en ce que** la portion d'encliquetage (22) et la portion en contre-dépouille (20) du support de module (12) sont prévues sur une paroi périphérique, de préférence sur une paroi périphérique intérieure délimitant le renfoncement (13), du support de module (12).

4. Appareil mobile (10) selon l'une des revendications précédentes, **caractérisé en ce que**
la portion en contre-dépouille (20) du support de module (12) s'étend sur toute la longueur de la portion en sécante (16) associée, et/ou en ce que la portion d'encliquetage (22) du support de module (12) s'étend sur un tronçon partiel, de préférence sur un tronçon partiel opposé à la portion en sécante (16), de la portion en arc de cercle (14) associée.

5. Appareil mobile (10) selon l'une des revendications précédentes, **caractérisé en ce que**
la portion d'encliquetage (22) du support de module (12) est conçue comme au moins un ergot d'encliquetage rigide (22) qui est de préférence agencé pour s'encliqueter avec une portion d'encliquetage (52) respective associée prévue sur la partie de couplage (42) du module de caméra (40), de préférence avec un élément d'encliquetage (52) à effet ressort ou monté sur ressort, ou
**en ce que** la portion d'encliquetage du support de module (12) est conçue comme au moins un élément d'encliquetage à effet ressort ou monté sur ressort, qui est de préférence agencé pour coopérer avec une portion d'encliquetage respective associée, prévue sur la partie de couplage (42) du module de caméra (40), de préférence avec un ergot d'encliquetage rigide.

6. Appareil mobile (10) selon l'une des revendications précédentes, **caractérisé en ce que**
le support de module (12) comporte plusieurs éléments de contact électriques (18) qui sont agencés pour coopérer avec des éléments de contact électriques (48) associés prévus sur la partie de couplage (42) d'un module de caméra connecté (40) afin de fournir une interface électrique pour la transmission de signaux électriques et de courants de fonctionnement entre l'appareil mobile (10) et le module de caméra (40),
de préférence, les éléments de contact (18) du support de module (12) étant prévus sur une surface de fond (24) du renfoncement (13).

7. Appareil mobile (10) selon l'une des revendications précédentes,
**caractérisé en ce que**
l'appareil mobile (10) comporte un cadre de montage (36) qui est conçu comme un support pour plusieurs composants de l'appareil mobile (10), et **en ce que** l'appareil mobile (10) comprend un porte-module de caméra (26) fixé directement au cadre de montage (36) et comportant le support de module (12).

8. Module de caméra (40), destiné à capturer des images fixes et/ou animées, pour un appareil mobile (10), de préférence un téléphone mobile, comportant un support de module (12), le module de caméra (40) comportant une partie de couplage (42) qui est conçue pour coopérer avec le support de module (12) de l'appareil mobile (10) afin de relier de manière amovible le module de caméra (40) à l'appareil mobile (10),
la partie de couplage (42) étant apte à être logée dans un renfoncement (13) du support de module (12),
la partie de couplage (42) présentant un contour périphérique formé par une portion en arc de cercle (44) et par une portion en sécante (46), **caractérisé en ce que**
la portion en arc de cercle (44) présente une portion d'encliquetage (52) et la portion en sécante (46) présente une portion en contre-dépouille (50), la portion d'encliquetage (52) étant conçu pour coopérer avec une portion d'encliquetage (22) du support de module (12), et la portion en contre-dépouille (50) étant conçu pour coopérer avec une portion en contre-dépouille (20) du support de module (12) lorsque le module de caméra (40) est relié à l'appareil mobile (10).

9. Module de caméra (40) selon la revendication 8,
**caractérisé en ce que**
l'angle sur lequel s'étend la portion en arc de cercle (44) est d'au moins 270°, de préférence d'au moins 300°, de manière particulièrement préférée d'au moins 315°.

10. Module de caméra (40) selon la revendication 8 ou 9,
**caractérisé en ce que**
la portion d'encliquetage (52) et la portion en contre-dépouille (50) de la partie de couplage (42) sont prévues sur une paroi périphérique, de préférence sur une paroi périphérique extérieure, de la partie de couplage (42).

11. Module de caméra (40) selon l'une des revendications 8 à 10, **caractérisé en ce que**
la portion en contre-dépouille (50) de la partie de couplage (42) s'étend sur toute la longueur de la portion en sécante (46) associée, et/ou en ce que la portion d'encliquetage (52) de la partie de couplage (42) s'étend sur un tronçon partiel, de préférence sur un tronçon partiel opposé à la portion en sécante (46), de la portion en arc de cercle (44) associée.

12. Module de caméra (40) selon l'une des revendications 8 à 11, **caractérisé en ce que**
la portion d'encliquetage (52) de la partie de couplage (42) est conçue comme au moins un élément d'encliquetage (52) à effet ressort ou monté sur ressort, qui est de préférence agencé pour coopérer avec une portion d'encliquetage (22) respective associée, prévue sur le support de module (12), de préférence avec un ergot d'encliquetage rigide (22), ou
**en ce que** la portion d'encliquetage de la partie de couplage (42) est conçue comme au moins un ergot d'encliquetage rigide, qui est de préférence agencé pour coopérer avec une portion d'encliquetage respective associée, prévue sur le support de module (12), de préférence avec un élément d'encliquetage à effet ressort ou monté sur ressort.

13. Module de caméra (40) selon l'une des revendications 8 à 12, **caractérisé en ce que**
la partie de couplage (42) comporte plusieurs éléments de contact électriques (48) qui sont agencés pour coopérer avec des éléments de contact électriques (18) associés prévus sur le support de module (12) d'un appareil mobile (10) connecté, afin de fournir une interface électrique pour la transmission de signaux électriques et de courants de fonctionnement entre l'appareil mobile (10) et le module de caméra (40),
de préférence, les éléments de contact (48) de la partie de couplage (42) étant prévus sur la face frontale (62) de la partie de couplage (42).

14. Système d'appareil mobile comprenant
un appareil mobile (10), de préférence un téléphone mobile, selon l'une des revendications 1 à 7,
et au moins un module de caméra (40), relié ou apte à être relié de manière amovible à l'appareil mobile (10), selon l'une des revendications 8 à 13.
